# EUROPÄISCHE PATENTSCHRIFT

(11) **EP 4 192 716 B1**
(45) Veröffentlichungstag und Bekanntmachung des Hinweises auf die Patenterteilung: **17.09.2025**
(21) Anmeldenummer: 21762378.4
(22) Anmeldetag: 05.08.2021
(51) Int. Cl.: B61B 13/04, B61F 5/50, B61L 15/00

(54) **VORRICHTUNG UND VERFAHREN ZUM STABILISIEREN EINES EINSPURIGEN FAHRZEUGS**
DEVICE AND METHOD FOR STABILIZING A SINGLE-TRACK VEHICLE
DISPOSITIF ET PROCÉDÉ POUR STABILISER UN VÉHICULE MONOTRACE

(30) Priorität: 05.08.2020 DE 102020120654
(43) Veröffentlichungstag der Anmeldung: 14.06.2023
(73) Patentinhaber: Technische Hochschule Ostwestfalen-Lippe Körperschaft des öffentlichen Rechts, 32657 Lemgo (DE)
(72) Erfinder: WITTE, Stefan, 32425 Minden (DE); SCHULTE, Thomas, 33813 Oerlinghausen (DE); KOTTMEIER, Fabian, 32547 Bad Oeynhausen (DE); GRIESE, Martin, 31860 Emmerthal (DE)
(74) Vertreter: Michalski Hüttermann & Partner Patentanwälte mbB
(86) Internationale Anmeldenummer: PCT/EP2021/071956
(87) Internationale Veröffentlichungsnummer: WO 2022/029274

(56) Entgegenhaltungen:
- WO-A1-2017/024473
- CN-A- 106 184 542
- DE-A1- 10 353 026
- DE-A1- 102014 218 962
- DE-A1- 102015 215 524
- FR-A- 1 527 982
- GB-A- 2 465 020
- SE-B- 392 248
- US-A- 1 947 119

## Beschreibung

Die Erfindung betrifft eine Vorrichtung zum Stabilisieren eines einspurigen Fahrzeugs, mit einem um eine Rotationsachse rotierbar in einem Rahmen angeordneten Kreisel und einem zur Erfassung von Kippbewegungen des einspurigen Fahrzeugs ausgestalteten Sensor.

Einspurige Fahrzeuge sind im Straßenverkehr häufig zu finden. Unter den Begriff "einspurige Fahrzeuge" fallen diejenigen Fahrzeuge, die in lediglich einer Spur oder auf einer Schiene fahren. Weist das einspurige Fahrzeug mehr als ein Rad auf, sind diese hintereinander angeordnet. Motorräder, elektrische Roller oder Fahrräder sind die bekanntesten einspurigen Fahrzeuge. Herkömmliche einspurige Fahrzeuge im Straßenverkehr werden in der Regel durch den Fahrer und sein Gleichgewicht aufrecht gehalten, was mit zunehmender Geschwindigkeit leichter wird, da bei einer höheren Geschwindigkeit eine höhere Fliehkraft wirkt, die es dem Fahrer erleichtert, das Kippen des Fahrzeugs aufgrund der Schwerkraft zu kompensieren. Durch kleine Lenkbewegungen und Gewichtsverlagerungen seitens des Fahrers können diese Kippbewegungen ausgeglichen werden, sodass das einspurige Fahrzeug aufrecht, zumindest ab einer gewissen Minimalgeschwindigkeit, gefahren werden kann.

Zu den einspurigen Fahrzeugen gehören auch Einschienenfahrzeuge. Typische und heute gebräuchliche Einschienenbahnen, so genannte Monorails, stabilisieren sich entweder formschlüssig auf einer entsprechenden nicht-klassischen Schiene mit einem großen geeigneten Querschnitt oder sie hängen an der Schiene, wie die Schwebebahn in Wuppertal in Deutschland. Es ist jedoch auch möglich, dass Einschienenfahrzeuge primär kreisstabilisiert fahren. Solche Einschienenfahrzeuge, mitunter auch MonoCabs genannt, halten ihre Vertikalposition während der Fahrt durch eine Kombination von Kreiselstabilisierung und Massenverlagerung. Kräfte von Antrieb und Bremse (Längsdynamik) werden über die Ränder übertragen. Anders als bei Motorrädern oder Fahrrädern können bei solchen Einschienenfahrzeugen Kippbewegungen nicht durch Lenkbewegungen ausgeglichen werden, da sie auf einer Schiene fahren. Solche Einschienenfahrzeuge bieten typischerweise zwar nur wenigen Personen Platz, können aber z.B. vorhandene Bahnstrecken aus dem Personen- und Güterverkehr vor Allem in weniger stark besiedelten Gebieten nutzen, um ein neues Fortbewegungsmittel bereitzustellen.

Die WO 2017/024 473 A1 beschreibt ein System zur Stabilisierung eines Fahrzeugs unter Verwendung eines oder mehrerer zusätzlicher Stützelemente am Fahrzeug, beispielsweise an den Seiten des Fahrzeugs. Die Hilfsstützelemente können sich von der Fahrzeugkarosserie weg erstrecken, um sich einer Stützfläche anzunähern und/oder diese zu berühren und für Stabilität und in einigen Fällen für zusätzliche Zentripetalkraft zu sorgen, um das Lenken des Fahrzeugs zu erleichtern.

Die GB 2465020 A beschreibt ein elektrisch angetriebenes Fahrzeug mit zwei oder mehr in Reihe angeordneten Rädern, wobei eines oder mehrere der Räder um eine vertikale Achse drehbar sind, um die Lenkung des Fahrzeuges zu ermöglichen, Ferner ist ein Ausgleichsmechanismus unter einem automatischen Steuersystem, das optional eine zeitdiskrete Steuerung ist, vorgesehen, die Sensoren verwendet, um das Drehmoment des Fahrzeugs in Echtzeit abzuschätzen und den Massenschwerpunkt des Fahrzeuges seitlich einzustellen.

Die CN 106 184 542 A beschreibt ein Steuerungssystem und ein Steuerungsverfahren für ein radspannenfreies Fahrzeug. Eine Drehimpulseinrichtung wird für die Lageregelung verwendet. Die Drehimpulseinrichtung wird durch die Verwendung des Schwerkraftmoments entlastet, so dass unter der Voraussetzung der Energieversorgung für das Steuersystem das radspannenfreie Fahrzeug auch in einem statischen oder langsam fahrenden Zustand für unbestimmt lange Zeit gehalten werden kann, indem keine Hilfsunterstützung verwendet wird.

Aufgabe der Erfindung ist es, eine Vorrichtung und ein Verfahren zum verbesserten Stabilisieren solcher einspurigen Fahrzeuge bereitzustellen.

Diese Aufgabe wird durch die Gegenstände der unabhängigen Patentansprüche gelöst. Bevorzugte Weiterbildungen finden sich in den Unteransprüchen.Ist vorliegend die Rede von einem einspurigen Fahrzeug, ist ein Fahrzeug gemeint, das mit einem Rad oder Reifen oder mit mehreren hintereinander angeordneten Räder oder Reifen nur in einer Spur oder auf einer Schiene fährt. Im Übrigen sei darauf hingewiesen, dass das Fahrzeug natürlich nicht nur mit einem einzigen um eine Rotationsachse rotierbar in einem Rahmen angeordneten Kreisel ausgerüstet sein kann sondern auch mit einer Mehrzahl solcher Kreisel.

Aufgrund des Kreiselstabilisierungssystems und aufgrund des Gewichtsstabilisierungssystem kann die Stabilität eines einspurigen Fahrzeugs erhöht werden, indem die Rotationsachse des Kreisels und der Schwerpunkt des einspurigen Fahrzeugs veränderbar ist.

Gemäß einer bevorzugten Weiterbildung der Erfindung ist das Stellglied derart eingerichtet und angeordnet ist, dass es mit dem Rahmen verbindbar und von diesem wieder trennbar ist. Dadurch, dass die Verbindung zwischen Stellglied und Rahmen steuerbar ist, also das Stellglied mit dem Rahmen verbindbar und auch wieder von diesem trennbar ist, kann das aktive Kreiselstabilisierungssystem an- bzw. ausgeschaltet werden. Das ist vor allem in solchen Situationen hilfreich, in denen die aktive Kreiselstabilisierung unmöglich wird. Bei Systemausfällen, wie bei Ausfällen der elektrischen Versorgung, der Lagesensorik, der Stellantriebe oder der fahrzeuginternen Kommunikation, kann somit das aktive Kreiselstabilisierungssystem entkoppelt und ein Notfallsystem aktiviert werden.

Gemäß einer bevorzugten Weiterbildung der Erfindung umfasst die vorbestimmte Masse der Schwerpunktseinheit wenigstens eine Fahrzeugbatterie des einspurigen Fahrzeugs. Für eine gute Stabilisierung eines einspurigen Fahrzeugs ist es hilfreich, wenn der Fahrzeugschwerpunkt möglichst tief liegt. Die Fahrzeugbatterie kann diese Vorgabe bei geeigneter Bauweise gut erfüllen, sodass sie sich als Schwerpunktseinheit eignet. Die Fahrzeugbatterie kann dabei auf einer Schiene angeordnet sein, sodass die Fahrzeugbatterie entlang dieser Schiene verschoben werden kann, um mit der Masse der Fahrzeugbatterie den Schwerpunkt des einspurigen Fahrzeugs zu verlagern und somit Kippbewegungen auszugleichen.

Gemäß einer alternativen aber auch mit der zuvor genannten Lösung kombinierbaren Weiterbildung der Erfindung umfasst die vorbestimmte Masse der Schwerpunktseinheit eine Flüssigkeit, die zwischen zwei Tanks umpumpbar ist, sodass die jeweilige Menge der Flüssigkeit in den Tanks steuerbar ist. Zwei oder mehrere Tanks können dabei nebeneinander angeordnet sein und über beispielsweise Schläuche und eine Pumpe miteinander verbunden sein. Abhängig von der zum Ausgleich von Kippbewegungen notwendigen Verschiebung des Fahrzeugschwerpunktes kann die Flüssigkeit zwischen den Tanks hin und her gepumpt werden, sodass dadurch ein variierbarer Fahrzeugschwerpunkt realisiert werden kann.

Alternativ ist gemäß einer bevorzugten Weiterbildung der Erfindung vorgesehen, dass die vorbestimmte Masse der Schwerpunktseinheit wenigstens eine zur Personenbeförderung verschiebbar ausgestaltete Sitzfläche und/oder wenigstens eine zur Beförderung von Ladegut verschiebbar ausgestaltete Stellfläche umfasst. Die Sitzfläche und/oder die Stellfläche ist dazu vorzugsweise bewegliche auf einer Schiene angeordnet. Zur Verlagerung des Fahrzeugschwerpunktes kann die Position der Sitzfläche und/oder der Stellfläche entlang dieser Schiene verschoben werden. Wie zuvor schon angedeutet, kann die verschiebbare Masse auch eine Kombination aus verschiebbarer Fahrzeugbatterie, unterschiedlich gefüllten Flüssigkeitstanks, verschiebbaren Sitzflächen und/oder verschiebbaren Stellflächen sein.

Gemäß einer alternativen Weiterbildung der Erfindung umfasst die vorbestimmte Masse der Schwerpunktseinheit eine in einer Richtung quer zur Fahrtrichtung verschiebbar ausgestaltete Fahrgastkabine. Dabei wird zur Verlagerung des Fahrzeugschwerpunktes nicht eine Schwerpunktseinheit innerhalb der Fahrgastkabine sondern die Fahrgastkabine selber verschoben. Die Fahrgastkabine wird dabei jedenfalls auch quer zur Fahrtrichtung verschoben, sodass das Fahrwerk nicht mittig der Fahrgastkabine fixiert ist, sondern z.B. an einer Schiene angeordnet ist, auf der die Fahrgastkabine positioniert ist und dadurch relativ zur Fahrwerksposition verschoben werden kann. Das Verlagern der vorbestimmten Masse kann somit dadurch erfolgen, dass die ganze Kabine bewegt wird und/oder indem einzelne Einheiten oder die Flüssigkeit bewegt wird.

Erfindungsgemäß ist eine mit dem Rahmen verbindbare Destabilisierungsvorrichtung vorgesehen, mit der im Falle eines Systemausfalls der in dem Rahmen angeordnete Kreisel in eine instabile Lage versetzt werden kann. Mit dem Begriff "Systemausfall" sind Ereignisse gemeint, die eine aktive Steuerung über das Kreisel- und/oder Gewichtsstabilisierungssystem unmöglich machen, beispielswiese indem die elektrische Versorgung, die Sensorik, der Stellantriebe, die fahrzeuginterne Kommunikation und/oder der Regelung ausfällt.

Es ist somit ein maßgeblicher Punkt der Erfindung, dass für den Fall, dass ein Systemausfall eintritt, die Destabilisierungsvorrichtung mit dem Rahmen gekoppelt werden kann. Die Destabilisierungsvorrichtung umfasst eine passive mechanische Vorrichtung, mit der der Kreiselrahmen in eine instabile Lage versetzt werden kann. Das einspurige Fahrzeug gerät dadurch in Schwingung mit steigender Amplitude um die eigene Längsachse. Die Zeit bis das einspurige Fahrzeug letztlich umstürzen würde kann beispielsweise zum Einleiten einer Notbremsung genutzt werden, sodass ein sicherer Betriebszustand des einspurigen Fahrzeugs trotz Systemausfall vorbereitet werden kann. Dadurch kann die Sicherheit des einspurigen Fahrzeugs inklusive der Passagiere gewährleistet werden.

Gemäß einer bevorzugten Weiterbildung der Erfindung weist die Destabilisierungsvorrichtung eine Feder auf. Die Feder kann bei einem Systemausfall mit dem Rahmen, in dem der Kreisel angeordnet ist, gekoppelt werden und dadurch den Rahmen in einen instabilen Zustand versetzen.

Eine weitere bevorzugte Weiterbildung der Erfindung liegt darin, dass das einspurige Fahrzeug ein im Falle einer Notbremsung aktivierbares Abstützsystem zum Abstützen des einspurigen Fahrzeugs auf dem Boden aufweist. Im Falle eines Systemausfalls kann eine Notbremsung des einspurigen Fahrzeugs notwendig werden. Sind jedoch die Stabilisierungssysteme inaktiv, kann das einspurige Fahrzeug umstürzen. Bei einer Notbremsung kann daher ein Abstützsystem herausgefahren werden, sodass das einspurige Fahrzeug in einen stabilen Stand gebracht werden kann.

Ein alternatives Sicherheitskonzept kann auch darin bestehen, dass das Stellglied und die Feder des Destabilisierungssystems sequentiell angeordnet sind. Es weist dabei ebenfalls ein Abstütz- und Notfallbremssystem auf.

Gemäß einer bevorzugten Weiterbildung der Erfindung ist das einspurige Fahrzeug ein Einschienenfahrzeug. Das Einschienenfahrzeug ist weist wenigstens ein Rad auf, das auf einer Schiene angeordnet ist. In der Fahrgastkabine des Einschienenfahrzeugs können z.B. Passagiere transportiert werden. Das Einschienenfahrzeug fährt dabei auf lediglich einer Schiene. Dazu kann es beispielsweise auf einer Schiene eines zweischienigen herkömmlichen Bahngleises fahren.

Bei dem erfindungsgemäßen Verfahren zum Stabilisieren eines einspurigen Fahrzeugs wird zuerst ein Kippen bestimmt. Das Kippen wird dabei relativ zur Hochachse des einspurigen Fahrzeugs erfasst. Daraufhin wird der Kreiselrahmen gedreht und der Schwerpunkt des einspurigen Fahrzeugs wird verlagert, um das Kippen auszugleichen. Mit dem aktiven Kreiselstabilisierungssystem können dabei stabilisierende, aber begrenzte Drehimpulse erzeugt werden. Bei einer stationären Störung, beispielsweise durch Seitenwind oder einer einseitigen Beladung, müsste das einspurige Fahrzeug in eine Kipplage versetzt werden, um dieser stationären Störung entgegen zu wirken. Dies führt jedoch zu Komplikationen vor allem beim Rad-Schienen oder Rad-Boden Kontakt. Daher kann der stationären Störung mit der Verlagerung des Schwerpunkts im Rahmen des Gewichtsstabilisierungssystems entgegengewirkt werden.

Das Kippen wird auch hier vorzugsweise über ein Kippmoments, einen Kippwinkel, eine Kippwinkelgeschwindigkeit und/oder eine Kippwinkelbeschleunigung erfasst. Gemäß einer bevorzugten Weiterbildung der Erfindung wird das Kippen in einer Ebene senkrecht zur Fahrtrichtung erfasst. Somit kann ein seitliches "Abkippen" des einspurigen Fahrzeugs erfasst werden.

Gemäß einer bevorzugten Weiterbildung der Erfindung erfolgt das Drehen des Rahmens mittels eines mit dem Rahmen verbundenen Stellglieds. Die Verbindung des Stellglieds mit dem Rahmen wird im Falle einer Notbremsung gelöst. Durch das Lösen der Verbindung zwischen Rahmen und Stellglied wird das aktive Kreiselstabilisierungssystem inaktiv. Das Stellglied wird dabei von einer Stellgliedsteuereinheit gesteuert.

Erfindungsgemäß umfasst das Verfahren folgende Verfahrensschritte: Verbinden einer Destabilisierungsvorrichtung mit dem Rahmen im Falle einer Notbremsung und Erzeugen eines Destabilisierungsdrehmoments zum Destabilisieren des in dem Rahmen angeordneten Kreisels. Die Destabilisierungsvorrichtung umfasst eine passive mechanische Vorrichtung, mit der der Kreiselrahmen in eine instabile Lage versetzt wird. Das einspurige Fahrzeug gerät dadurch in Schwingung, typischerweise in langsame Schwingungen, um die eigene Längsachse mit steigender Amplitude. Eine Notbremsung wird eingeleitet, sodass ein sicherer Betriebszustand des einspurigen Fahrzeugs beispielsweise bei einem Systemausfall vorbereitet werden kann. Dadurch kann die Sicherheit des einspurigen Fahrzeugs inklusive der Passagiere gewährleistet werden.

Gemäß einer bevorzugten Weiterbildung der Erfindung umfasst das Verfahren folgende weitere Verfahrensschritte: Ausfahren eines Abstützsystems im Falle einer Notfallbremsung und Herstellen einer Verbindung zwischen dem einspurigen Fahrzeug und dem Boden durch das Abstützsystem. Bei einer Notbremsung wird also das Abstützsystem herausgefahren, sodass auf diese Weise zwischen dem einspurigen Fahrzeug und dem Boden eine Verbindung hergestellt und das einspurige Fahrzeug in eine stabile Position gebracht wird.

Nachfolgend wir die Erfindung anhand bevorzugter Ausführungsbeispiele und anhand von Beispielen, die lediglich dem Verständnis der Erfindung dienen, unter Bezugnahme auf die Zeichnungen weiter im Detail erläutert.

In den Zeichnungen zeigen
- Fig. 1: schematisch eine Vorrichtung zum Stabilisieren eines einspurigen Fahrzeugs mit einem Kreiselstabilisierungssystem,
- Fig. 2: schematisch eine Vorrichtung zum Stabilisieren eines einspurigen Fahrzeugs gemäß einem Ausführungsbeispiel der Erfindung mit einem Kreiselstabilisierungs- und einem Gewichtsstabilisierungssystem und
- Fig. 3 a, b, c: verschiedene Ausführungsbeispiele des Gewichtsstabilisierungssystems.

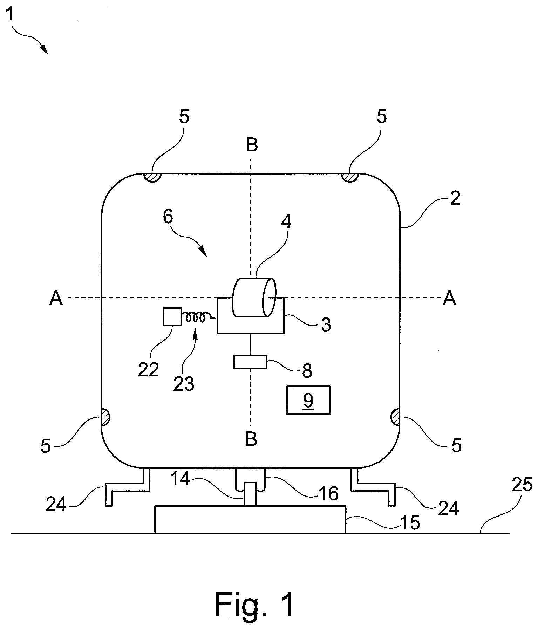

Aus Figur 1 ist schematisch eine Vorrichtung 1 zum Stabilisieren eines einspurigen Fahrzeugs 2 ersichtlich. Das einspurigen Fahrzeug 2 weist ein Rad 16 auf, das auf einer Schiene 14 eines Schienenunterbaus 15 läuft. In dem einspurige Fahrzeug 2 ist ein Kreiselstabilisierungssystem 6 angeordnet. Es umfasst einen Kreisel 4, der in einem Rahmen 3 befestigt ist. Der Rahmen 3 ist mit einem Stellglied 8 verbunden, über das die Position des Rahmens 3 gesteuert werden kann. Das Stellglied 8 wird dabei von einer Stellgliedsteuereinheit 9 gesteuert. Der Kreisel 4 rotiert um die Rotationsachse A-A. Der Rahmen 3, in dem der Kreisel 4 angeordnet ist, wird um die Hochachse B-B gedreht, sodass damit der Kreisel 4 und die Rotationsachse A-A, um die der Kreisel rotiert, ebenfalls gedreht werden kann. Alternativ kann die Rotationsachse des Kreisels 4 B-B sein und der Rahmen 3 mittels des Stellgliedes 8 um die Achse A-A gedreht werden. Dadurch kann das Drehmoment des Kreisels 4, das zur Stabilisierung des einspurigen Fahrzeugs 2 verantwortlich ist, ausgerichtet werden. Es sind Sensoren 5 vorgesehen, die eine mögliche Kippbewegung des einspurigen Fahrzeugs 2 erfassen. Im Falle eines Systemausfalls wird der Rahmen 3 von dem Stellglied 8 entkoppelt und mit der Destabilisierungsvorrichtung 22 über eine Feder 23 gekoppelt. Die Feder 23 versetzt den Rahmen 3 in einen instabilen Zustand. Kommt das einspurige Fahrzeug 2 zum Stehen, kann mit Hilfe eines Abstützsystems 24 eine sichere Verbindung zwischen dem einspurigen Fahrzeug 2 und dem Boden 25 hergestellt werden.

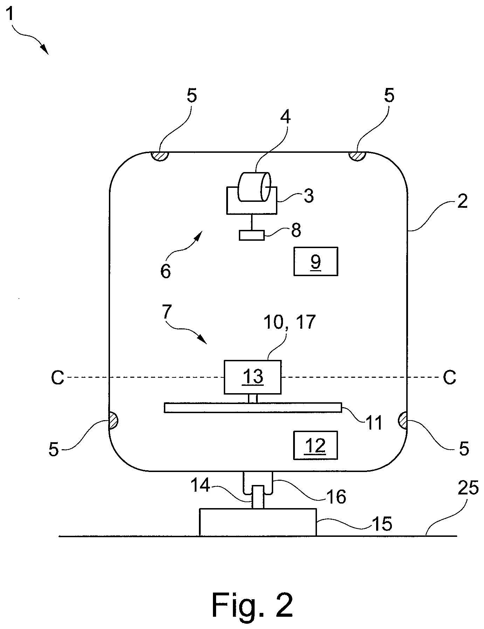

Fig. 2 zeigt schematisch eine Vorrichtung 1 zum Stabilisieren eines einspurigen Fahrzeugs 2 gemäß einem Ausführungsbeispiel der Erfindung mit einem Kreiselstabilisierungssystem 6 und einem Gewichtsstabilisierungssystem 7. Das einspurige Fahrzeug 2 ist analog zum einspurigen Fahrzeug 2 aus Fig. 1 aufgebaut. Auch das Kreiselstabilisierungssystem 6 ist somit analog zum Kreiselstabilisierungssystem 6 aus Fig. 1 aufgebaut. Zusätzlich zu dem Kreiselstabilisierungssystem 6 ist in dem einspurigen Fahrzeug 2 ein Gewichtsstabilisierungssystem 7 angeordnet. Es umfasst eine Schwerpunktseinheit 10, die gemäß dem Ausführungsbeispiel aus Fig. 2 von einer Fahrzeugbatterie 17 des einspurigen Fahrzeugs 2 gebildet wird. Die Schwerpunktseinheit 10 umfasst eine Masse 13, die entlang der Verschiebeachse C-C mit Hilfe der Verlagerungsvorrichtung 11 verschoben werden kann. Die Verlagerung wird über eine Verlagerungsvorrichtungssteuereinheit 12 gesteuert. Das einspurige Fahrzeug 2 umfasst folglich sowohl ein Kreiselstabilisierungssystem 6 als auch ein Gewichtsstabilisierungssystem 7. Die mit den Sensoren 5 gemessene Kippbewegung kann somit mit Hilfe der Stabilisierungssysteme 6, 7 ausgeglichen werden.

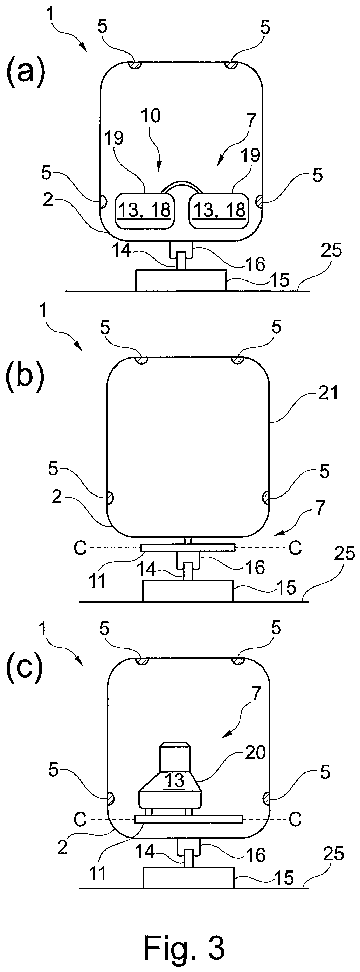

Die Fig. 3a, b, c zeigen drei Ausführungsbeispiele des Gewichtsstabilisierungssystems der Erfindung. Das Gewichtsstabilisierungssystem 7 aus Fig. 3a wird anhand zwei Tanks 19 realisiert. Die Tanks 19 bilden die Schwerpunktseinheit 10 und sind mit einer Flüssigkeit 18 gefüllt. Die Masse 13 der Flüssigkeit 18 kann verlagert werden, indem die Flüssigkeit 18 zwischen den Tanks 19 hin und her gepumpt wird. Dadurch kann der Schwerpunkt des einspurigen Fahrzeugs 2 verlagert werden. Je mehr Tanks 19 das Gewichtsstabilisierungssystem 7 umfasst, desto präziser kann der Schwerpunkt des einspurigen Fahrzeugs 2 verlagert werden.

Das Gewichtsstabilisierungssystem 7 aus Fig. 3b wird anhand einer verschiebbaren Fahrgastkabine 21 realisiert. Die Fahrgastkabine 21 ist auf einer Verlagerungsvorrichtung 11 verschiebbar angeordnet. Zum Ausgleichen der Kippbewegung kann die Fahrgastkabine 21 quer zur Fahrtrichtung entlang der Verschiebachse C-C verschoben werden. Dadurch werden die Fahrgastkabine 21 und ihr Schwerpunkt relativ zur Position des auf der Schiene 14 angeordneten Rades 16 verschoben.

Das Gewichtsstabilisierungssystem 7 aus Fig. 3c wird anhand einer verschiebbaren Sitzfläche 20 realisiert. Die Sitzfläche 20 ist auf einer Verschiebevorrichtung 11 angeordnet und kann entlang der Verschiebeachse C-C verschoben werden. Durch das Verschieben der Masse 13 der Sitzfläche 20 kann der Schwerpunkt des einspurigen Fahrzeugs 2 entsprechend der mit den Sensoren 5 gemessenen Kippbewegung verlagert werden.

### Bezugszeichenliste

- 1: Vorrichtung zum Stabilisieren
- 2: einspuriges Fahrzeug
- 3: Rahmen
- 4: Kreisel
- 5: Sensor
- 6: Kreiselstabilisierungssystem
- 7: Gewichtsstabilisierungssystem
- 8: Stellglied
- 9: Stellgliedsteuereinheit
- 10: Schwerpunktseinheit
- 11: Verlagerungsvorrichtung
- 12: Verlagerungsvorrichtungssteuereinheit
- 13: Masse
- 14: Schiene
- 15: Schienenunterbau
- 16: Rad
- 17: Fahrzeugbatterie
- 18: Flüssigkeit
- 19: Tank
- 20: Sitzfläche
- 21: verschiebbare Fahrgastkabine
- 22: Destabilisierungsvorrichtung
- 23: Feder
- 24: Abstützsystem
- 25: Boden
- A: Rotationsachse
- B: Hochachse
- C: Verschiebeachse

## Patentansprüche

1. Vorrichtung (1) zum Stabilisieren eines einspurigen Fahrzeugs (2), mit
einem zur Erfassung von Kippbewegungen des einspurigen Fahrzeugs ausgestalteten Sensor (5),
einem Kreiselstabilisierungssystem (6) und
einem Gewichtsstabilisierungssystem (7), wobei
das Kreiselstabilisierungssystem (6) einen um eine Rotationsachse (A-A) rotierbar in einem Rahmen (3) angeordneten Kreisel (4), ein bewegbares Stellglied (8), mit dem der Rahmen (3) derart im Raum bewegbar ist, dass die Rotationsachse (A-A) des Kreisels (4) verändert wird, und eine Stellgliedsteuereinheit (9) zum Steuern des Bewegens des Stellglieds (8) aufweist und
das Gewichtsstabilisierungssystem (7) eine Schwerpunktseinheit (10) mit einer vorbestimmten Masse (13), eine Verlagerungsvorrichtung (11) zum Verlagern der Masse der Schwerpunktseinheit (10) und eine Verlagerungsvorrichtungssteuereinheit (12) zum Steuern des Verlagerns der Masse (13) der Verlagerungsvorrichtung (11) aufweist,
**dadurch gekennzeichnet, dass**
das Kreiselstabilisierungssystem eine mit dem Rahmen (3) verbindbare Destabilisierungsvorrichtung (22) aufweist, mit der im Falle eines Systemausfalls der in dem Rahmen (3) angeordnete Kreisel (4) in eine instabile Lage versetzt werden kann.

2. Vorrichtung (1) nach Anspruch 1, **dadurch gekennzeichnet, dass** das Stellglied (8) derart eingerichtet und angeordnet ist, dass es mit dem Rahmen (3) verbindbar und von diesem wieder trennbar ist.

3. Vorrichtung (1) nach einem der vorherigen Ansprüche, **dadurch gekennzeichnet, dass** die vorbestimmte Masse (13) der Schwerpunktseinheit (10) wenigstens eine Fahrzeugbatterie (17) des einspurigen Fahrzeugs (2) umfasst.

4. Vorrichtung (1) nach einem der vorherigen Ansprüche, **dadurch gekennzeichnet, dass** die vorbestimmte Masse (13) der Schwerpunktseinheit (10) eine Flüssigkeit (18) umfasst, die zwischen zwei Tanks (19) umpumpbar ist, sodass die jeweilige Menge der Flüssigkeit (18) in den Tanks (19) steuerbar ist.

5. Vorrichtung (1) nach einem der vorherigen Ansprüche, **dadurch gekennzeichnet, dass** die vorbestimmte Masse (13) der Schwerpunktseinheit (10) wenigstens eine zur Personenbeförderung verschiebbar ausgestaltete Sitzfläche (20) und/oder wenigstens eine zur Beförderung von Ladegut verschiebbar ausgestaltete Stellfläche umfasst.

6. Vorrichtung (1) nach einem der vorherigen Ansprüche, **dadurch gekennzeichnet, dass** die vorbestimmte Masse (13) der Schwerpunktseinheit (10) eine in einer Richtung quer zur Fahrtrichtung verschiebbar ausgestaltete Fahrgastkabine (21) umfasst.

7. Vorrichtung (1) nach einem der vorherigen Ansprüche, **dadurch gekennzeichnet, dass** die Destabilisierungsvorrichtung (22) eine Feder (23) aufweist.

8. Vorrichtung (1) nach einem der vorherigen Ansprüche, **dadurch gekennzeichnet, dass** das einspurige Fahrzeug (2) ein im Falle einer Notbremsung aktivierbares Abstützsystem (24) zum Abstützen des einspurigen Fahrzeugs auf dem Boden (25) aufweist.

9. Vorrichtung (1) nach einem der vorherigen Ansprüche, **dadurch gekennzeichnet, dass** das einspurige Fahrzeug (2) ein Einschienenfahrzeug ist.

10. Verfahren zum Stabilisieren eines einspurigen Fahrzeugs (2), das mit einem um eine Rotationsachse (A-A) in einem Rahmen (3) rotierenden Kreisel (4) versehen ist, mit den folgenden Verfahrensschritten:
Erfassen eines Kippens des einspurigen Fahrzeugs (2) relativ zur Hochachse (B-B) des einspurigen Fahrzeugs (2) und
Drehen des Rahmens (3) und Verlagern der Masseverteilung des einspurigen Fahrzeugs (2) zum Ausgleichen des Kippens;
Verbinden einer Destabilisierungsvorrichtung (22) mit dem Rahmen (3) im Falle einer Notbremsung und
Erzeugen eines Destabilisierungsdrehmoments zum Destabilisieren des in dem Rahmen (3) angeordneten Kreisels (4),

11. Verfahren nach Anspruch 10, **dadurch gekennzeichnet, dass** das Kippen in einer Ebene senkrecht zur Fahrtrichtung erfasst wird.

12. Verfahren nach Anspruch 10 oder 11, **dadurch gekennzeichnet, dass** das Drehen des Rahmens (3) mittels eines mit dem Rahmen verbundenen Stellglieds (8) erfolgt und die Verbindung des Stellglieds (8) mit dem Rahmen (3) im Falle einer Notbremsung gelöst wird.

13. Verfahren nach einem der Ansprüche 10 bis 12, mit folgenden weiteren Verfahrensschritten:
Ausfahren eines Abstützsystems (24) im Falle einer Notfallbremsung und
Herstellen einer Verbindung zwischen dem einspurigen Fahrzeug (2) und dem Boden (25).

## Claims

1. Device (1) for stabilizing a single-track vehicle (2), comprising
a sensor configured to detect tipping movements of the single-track vehicle (5),
a gyro stabilisation system (6) and
a weight stabilisation system (7), wherein
the gyro stabilization system (6) comprises a gyro (4) arranged in a frame (3) which can be rotated about an axis of rotation (A-A), a movable actuator (8) with which the frame (3) can be moved in space such that the axis of rotation (A-A) of the gyro (4) is changed, and an actuator control unit (9) for controlling the movement of the actuator (8), and
the weight stabilization system (7) comprises a center of gravity unit (10) with a predetermined mass (13), a displacement device (11) for displacing the mass of the center of gravity unit (10), and a displacement device control unit (12) for controlling the displacement of the mass (13) of the displacement device (11),
**characterized in that**
the gyro stabilization system comprises a destabilization device (22) connectable to the frame (3), with which, in the event of a system failure, the gyro (4) arranged in the frame (3) can be placed in an unstable position.

2. Device (1) according to claim 1, **characterized in that** the actuator (8) is configured and arranged such that it can be connected to the frame (3) and separated from it again.

3. Device (1) according to one of the preceding claims, **characterized in that** the predetermined mass (13) of the center of gravity unit (10) comprises at least one vehicle battery (17) of the single-track vehicle (2).

4. Device (1) according to one of the preceding claims, **characterized in that** the predetermined mass (13) of the center of gravity unit (10) comprises a liquid (18) which can be pumped between two tanks (19), so that the respective amount of the liquid (18) in the tanks (19) is controllable.

5. Device (1) according to one of the preceding claims, **characterized in that** the predetermined mass (13) of the center of gravity unit (10) comprises at least one seat surface (20) configured to be displaceable for the transport of persons and/or at least one storage surface configured to be displaceable for the transport of cargo.

6. Device (1) according to any of the preceding claims, **characterized in that** the predetermined mass (13) of the center of gravity unit (10) comprises a passenger cabin (21) configured to be displaceable in one direction transverse to the direction of travel.

7. Device (1) according to one of the preceding claims, **characterized in that** the destabilizing device (22) has a spring (23).

8. Device (1) according to any of the preceding claims, **characterized in that** the single-track vehicle (2) has a support system (24) which can be activated in the event of an emergency braking operation for supporting the single-track vehicle on the ground (25).

9. Device (1) according to one of the preceding claims, **characterized in that** the single-track vehicle (2) is a monorail vehicle.

10. A method for stabilizing a single-track vehicle (2) equipped with a gyro (4) rotating about an axis of rotation (A-A) in a frame (3), comprising the following method steps:
detecting a tipping of the single-track vehicle (2) relative to the vertical axis (B-B) of the single-track vehicle (2) and
rotating the frame (3) and shifting the mass distribution of the single-track vehicle (2) to compensate for tipping;
connecting a destabilizing device (22) to the frame (3) in the event of emergency braking, and
generating a destabilizing torque to destabilize the gyro (4) arranged in the frame (3).

11. A method according to claim 10, **characterized in that** the tipping is detected in a plane perpendicular to the direction of travel.

12. The method of claim 10 or 11, **characterized in that** the rotation of the frame (3) takes place by means of an actuator (8) connected to the frame and the connection of the actuator (8) to the frame (3) is released in the event of emergency braking.

13. A method according to one of claims 10 to 12, comprising the following further method steps:
extending a support system (24) in the event of emergency braking, and
establishing a connection between the single-track vehicle (2) and the ground (25).

## Revendications

1. Dispositif (1) de stabilisation d'un véhicule à voie unique (2), comprenant
un capteur conçu pour détecter les mouvements de basculement du véhicule à voie unique (5),
un système de stabilisation gyroscopique (6) et
un système de stabilisation pondérale (7), dans lequel
le système de stabilisation gyroscopique (6) comprend un gyroscope (4) disposé dans un cadre (3) de manière à pouvoir tourner autour d'un axe de rotation (A-A), un actionneur mobile (8) avec lequel le cadre (3) peut être déplacé dans l'espace de telle sorte que l'axe de rotation (A-A) du gyroscope (4) est modifié, et une unité de commande d'actionneur (9) pour commander le mouvement de l'actionneur (8), et
le système de stabilisation pondérale (7) comprend une unité de centre de gravité (10) avec une masse prédéterminée (13), un dispositif de déplacement (11) pour déplacer la masse de l'unité de centre de gravité (10) et une unité de commande de dispositif de déplacement (12) pour commander le déplacement de la masse (13) du dispositif de déplacement (11),
**caractérisé en ce que**
le système de stabilisation gyroscopique comprend un dispositif de déstabilisation (22) pouvant être relié au cadre (3), avec lequel, en cas de défaillance du système, le gyroscope (4) disposé dans le cadre (3) peut être placé dans une position instable.

2. Dispositif (1) selon la revendication 1, **caractérisé en ce que** l'actionneur (8) est agencé et disposé de telle manière qu'il peut être relié au cadre (3) et séparé de celui-ci.

3. Dispositif (1) selon l'une quelconque des revendications précédentes, **caractérisé en ce que** la masse prédéterminée (13) de l'unité de centre de gravité (10) comprend au moins une batterie de véhicule (17) du véhicule à voie unique (2).

4. Dispositif (1) selon l'une quelconque des revendications précédentes, **caractérisé en ce que** la masse prédéterminée (13) de l'unité de centre de gravité (10) comprend un liquide (18) qui peut être pompé entre deux réservoirs (19), de sorte que la quantité respective du liquide (18) dans les réservoirs (19) peut être contrôlée.

5. Dispositif (1) selon l'une quelconque des revendications précédentes, **caractérisé en ce que** la masse prédéterminée (13) de l'unité de centre de gravité (10) comprend au moins une surface de siège (20) conçue pour être déplaçable pour le transport de personnes et/ou au moins une surface de rangement pour être déplaçable pour le transport de marchandises.

6. Dispositif (1) selon l'une quelconque des revendications précédentes, **caractérisé en ce que** la masse prédéterminée (13) de l'unité de centre de gravité (10) comprend une cabine passagers (21) conçue pour être déplaçable dans une direction transversale à la direction de déplacement.

7. Dispositif (1) selon l'une quelconque des revendications précédentes, **caractérisé en ce que** le dispositif de déstabilisation (22) comprend un ressort (23).

8. Dispositif (1) selon l'une quelconque des revendications précédentes, **caractérisé en ce que** le véhicule à voie unique (2) comprend un système de support (24) qui peut être activé en cas de freinage d'urgence pour soutenir le véhicule à voie unique sur le sol (25).

9. Dispositif (1) selon l'une quelconque des revendications précédentes, **caractérisé en ce que** le véhicule à voie unique (2) est un véhicule monorail.

10. Procédé de stabilisation d'un véhicule à voie unique (2) équipé d'un gyroscope (4) tournant autour d'un axe de rotation (A-A) dans un cadre (3), comprenant les étapes de procédé suivantes:
la détection d'un basculement du véhicule à voie unique (2) par rapport à l'axe vertical (B-B) du véhicule à voie unique (2) et
la rotation du cadre (3) et le déplacement de la répartition de la masse du véhicule à voie unique (2) pour compenser le basculement;
la connexion d'un dispositif de déstabilisation (22) au cadre (3) en cas de freinage d'urgence, et
la génération d'un couple de déstabilisation pour déstabiliser le gyroscope (4) disposé dans le cadre (3).

11. Procédé selon la revendication 10, **caractérisé en ce que** le basculement est détecté dans un plan perpendiculaire à la direction de déplacement.

12. Procédé selon la revendication 10 ou 11, **caractérisé en ce que** la rotation du cadre (3) est effectuée au moyen d'un actionneur (8) relié au cadre et la liaison de l'actionneur (8) avec le cadre (3) est libérée en cas de freinage d'urgence.

13. Procédé selon l'une quelconque des revendications 10 à 12, comprenant les étapes supplémentaires suivantes:
le déploiement d'un système d'assistance (24) en cas de freinage d'urgence, et
la réalisation d'une liaison entre le véhicule à voie unique (2) et le sol (25).
